(19) **Europäisches Patentamt European Patent Office Office européen des brevets**

(11) **EP 4 614 399 A1**

(12) **EUROPEAN PATENT APPLICATION**

(43) Date of publication:
**10.09.2025 Bulletin 2025/37**

(21) Application number: **24305337.8**

(22) Date of filing: **05.03.2024**

(51) International Patent Classification (IPC):
**G06N 10/20** (2022.01)   **G06N 10/40** (2022.01)
**G06N 10/70** (2022.01)

(52) Cooperative Patent Classification (CPC):
**G06N 10/20; G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **MAGNARD, Paul**
 **75015 Paris (FR)**
• **DEVULDER, Adam**
 **75015 Paris (FR)**
• **COTTET, Nathanaël**
 **75015 Paris (FR)**
• **JEZOUIN, Sébastien**
 **75015 Paris (FR)**

(74) Representative: **Cabinet Netter**
 **36, avenue Hoche**
 **75008 Paris (FR)**

(54) **METHOD FOR ASSESSING A QUANTUM GATE FIDELITY**

(57)    A method for measuring the probability of a bit flip and/or of a phase flip while performing a CNOT gate between a control qubit having a control qubit resonance frequency and a target qubit having a target qubit resonance frequency, in which said CNOT gate is performed by the following sequence of operations:

S1) applying a dissipative stabilization on said target qubit and said control qubit,

S2) applying a radiation having said control qubit resonance frequency such that said target qubit and said control qubit are substantially simultaneously subject to a Hamiltonian resulting from said radiation having said control resonance frequency,

S3) after a chosen gate duration, turning off said radiation having said control qubit resonance frequency, and applying said dissipative stabilization on said target qubit for a chosen restabilization duration,

wherein said method comprises the following operations:

a) providing a superconducting quantum circuit comprising a control qubit and a target qubit which are both biased-noise qubits stabilized in a dissipative manner, and which are non-linearly coupled,

b) determining (300) a set of phase flip CNOT repetitions comprising a plurality of distinct integers comprised between 0 and a phase flip ceiling value and/or a set of bit flip CNOT repetitions comprising a plurality of distinct integers comprised between 0 and a bit flip ceiling value,

c) for each integer npf in said phase flip CNOT repetitions set perform steps c1) to c5) (330) and/or for each integer nbf in said bit flip CNOT repetitions set perform steps c6) to c10) (320):

c1) set a measurement control qubit logical state $|\alpha\rangle_C$, a phase $\phi_C$ comprised in the range $[0;2\pi]$, a measurement target qubit logical state $|\alpha\rangle_T$, a phase $\phi_T$ comprised in the set of values $\{0;\pi\}$,

c2) prepare the control qubit in a state $|+\alpha\rangle_C + e^{i\phi C}|-\alpha\rangle_C$, and the target qubit in a state $|+\alpha\rangle_T + e^{i\phi}_T|-\alpha\rangle_T$,

c3) perform npf times said CNOT gate between the control qubit and the target qubit of operation c2),

c4) measure the Pauli operator X of the target qubit, the Pauli operator Y of the target qubit, the Pauli operator X of the control qubit, and the Pauli operator Y of the control qubit,

c5) repeat operations c2) to c4) in order to obtain an average value for each measurement of operation c4),

c6) set a measurement control qubit logical state $|\alpha\rangle_C$, and a measurement target qubit logical state $|\alpha\rangle_T$,

c7) prepare the control qubit in a state $|+\alpha\rangle_C$ or $|-\alpha\rangle_C$, and the target qubit in a state $|+\alpha\rangle_T$ or $|-\alpha\rangle_T$,

c8) perform nbf times said CNOT gate between the control qubit and the target qubit of operation c7),

c9) measure the Pauli operator Z of the target qubit,

c10) repeat operations c7) to c9) in order to obtain an average value for the measurement of operation c9),

d) if available fit the measurements $|\langle X + i\,Y\rangle_T|$ and $|\langle X + i\,Y\rangle_C|$ of operation c5) (350) on respective curves based on an exponential function of the number of CNOT repetitions to derive phase flip probability values $pZ_C$ for the control qubit and $pZ_T$ for the target qubit, and the measurements $|\langle Z_T\rangle|$ of operation c10) (340) on a curve based on an exponential function of the number of CNOT repetitions to derive the bit flip probability value $pX_T$ for the target qubit.

FIG. 3

300 Rep[] = Nmax()

n=Pop(Rep[])?     310     ──No──

Yes

320 Z[]=Meas_Avg_Z(n)

330 (X[];Y[])=Meas_Avg_XY(n)

PXt = FitX(Z[])     340

(PZt;PZc) = FitZ(X[];Y[])     350

**Description**

The invention concerns a method for assessing quantum gate fidelity.

A. General context

A1. General considerations relating to quantum systems error correction

Quantum gates are fundamental logical bricks which are essential to realizing a quantum computing device. They typically involve one or more qubits. Some quantum gates involve two qubits - a control qubit and a target qubit which state will change depending on the control qubit state.

To extract the joint information of several data qubits, conventional quantum circuits perform a sequence of two-qubit gates (typically CNOT gates) between an ancilla qubit (acting as the control qubit) and the several data qubits (each acting as the target qubit) before measuring the ancilla qubit. When this operation is used to detect errors, it is included in a syndrome extraction round (or "SER").

The realization of these quantum gates is crucial to detect errors and thus perform quantum error correction codes (or "QECC"), which is currently considered as the only way to build a reliable and usable quantum chip. The general idea behind QECC is to use several (at least three) physical qubits to encode a logical qubit, an error detection scheme being put in place to verify that the several physical qubits information do not change over time. If an error is detected, error correction is performed, whether by changing the qubit states themselves or by post treatment of the result of the quantum algorithm involving these qubits. The circuits which are used to implement QECC are called quantum error correction circuits or QEC circuits.

A2. Prior art CNOT quantum gate fidelity

The characteristics which are used to assess the quality of a quantum gate are its execution time (that is the time for the gate to operate) and the associated error probability. Knowing the error probability in terms of bit flip and phase flip is of paramount importance, as it allows to better predict the reliability of the SER, and consequently of the QECC.

In the case of a phase flip QECC relying on a CNOT gate to perform the SER, the most important errors to be measured are the probability $pX_T$ of a bit flip during the CNOT on the target qubit, the probability $pZ_C$ of a phase flip during the CNOT on the control qubit, and the probability $pZ_T$ of a phase flip during the CNOT on the target qubit.

The prior art on these probabilities measurement currently relies on two approaches.

The main approach is to perform a whole quantum process tomography (or "QTP") of the CNOT to derive the measurements. The measurements of the QTP itself are subject to other types of errors than the ones relevant for the QEC circuit, such as state preparation and measurement (or "SPAM") errors.

In practice, deconvoluting the SPAM errors from the bit flip and phase flip errors can be challenging and requires an ad-hoc approach, based on independent measurements to characterize the SPAM errors. Moreover, measuring the whole QPT demands the preparation of 16 different initial states and the measurement of 16 different sets of observables, followed by a fit of the measured QPT matrix by the theoretical quantum process map. This is thus a heavy task preventing from testing many variations of the CNOT. All in all, while providing reliable results, this method is impractical to perform. Furthermore, due to its cumbersome nature, this process is particularly unfit to be used to optimize the parameters of the CNOT gate, and even less so in an automated manner.

Recently, in the specific field of biased-noise qubits, a theoretical approach has been outlined in the article by Claes et al. "Estimating the Bias of CX Gates via Character Randomized Benchmarking", PRX Quantum 4, 010307, doi 10.1103/PRXQuantum.4.010307. In this theoretical method, the CNOT gate would be repeated several times, with random single-qubit Clifford gates interleaved in between. In particular, it discloses estimating fidelity of a gate by using standard or interleaved-biased random benchmarking in which one interleaves the gate of interest with random elements from an interleaving group designed to simplify the error channel.

This approach appears efficient to derive the noise-bias property of the CNOT gate, which is directly related to the bit flip probability $pX_T$. However, not only has it not been validated experimentally, but it also requires excellent single qubit gates, which do not exist. As a result, the quality of the result is likely to be tainted in experimentation by the fact that the single qubit gates will not be perfect.

The invention aims at improving the situation. To this end, the Applicant proposes a method for measuring the probability of a bit flip and/or of a phase flip while performing a CNOT gate between a control qubit having a control qubit resonance frequency and a target qubit having a target qubit resonance frequency, in which said CNOT gate is performed by the following sequence of operations:

S1) applying a dissipative stabilization on said target qubit and said control qubit,

S2) applying a radiation having said control qubit resonance frequency such that said target qubit and said control qubit are substantially simultaneously subject to a Hamiltonian resulting from said radiation having said control resonance frequency,

S3) after a chosen gate duration, turning off said radiation having said control qubit resonance frequency, and applying said dissipative stabilization on said target qubit for a chosen restabilization duration. This method comprises the following operations:

a) providing a superconducting quantum circuit comprising a control qubit and a target qubit which are both biased-noise qubits stabilized in a dissipative manner, and which are non-linearly coupled,

b) determining a set of phase flip CNOT repetitions comprising a plurality of distinct integers comprised between 0 and a phase flip ceiling value and/or a set of bit flip CNOT repetitions comprising a plurality of distinct integers comprised between 0 and a bit flip ceiling value,

c) for each integer npf in said phase flip CNOT repetitions set perform steps c1) to c5) and/or for each integer nbf in said bit flip CNOT repetitions set perform steps c6) to c10):

c1) set a measurement control qubit logical state $|\alpha\rangle_C$, a phase $\phi_C$ comprised in the range $[0;2\pi]$, a measurement target qubit logical state $|\alpha\rangle_T$, a phase $\phi_T$ comprised in the set of values $\{0;\pi\}$,

c2) prepare the control qubit in a state $|+\alpha\rangle_C + e^{i\phi_C}|-\alpha\rangle_C$, and the target qubit in a state $|+\alpha\rangle_T + e^{i\phi_T}|-\alpha\rangle_T$,

c3) perform npf times said CNOT gate between the control qubit and the target qubit of operation c2),

c4) measure the Pauli operator X of the target qubit, the Pauli operator Y of the target qubit, the Pauli operator X of the control qubit, and the Pauli operator Y of the control qubit,

c5) repeat operations c2) to c4) in order to obtain an average value for each measurement of operation c4),

c6) set a measurement control qubit logical state $|\alpha\rangle_C$, and a measurement target qubit logical state $|\alpha\rangle_T$,

c7) prepare the control qubit in a state $|+\alpha\rangle_C$ or $|-\alpha\rangle_C$, and the target qubit in a state $|+\alpha\rangle_T$ or $|-\alpha\rangle_T$,

c8) perform nbf times said CNOT gate between the control qubit and the target qubit of operation c7),

c9) measure the Pauli operator Z of the target qubit,

c10) repeat operations c7) to c9) in order to obtain an average value for the measurement of operation c9),

d) if available fit the measurements $|\langle X + i\,Y\rangle_T|$ and $|\langle X + i\,Y\rangle_C|$ of operation c5) on respective curves based on an exponential function of the number of CNOT repetitions to derive phase flip probability values $pZ_C$ for the control qubit and $pZ_T$ for the target qubit, and the measurements $|\langle Z_T\rangle|$ of operation c10) on a curve based on an exponential function of the number of CNOT repetitions to derive the bit flip probability value $pX_T$ for the target qubit.

This method is advantageous because it has been experimentally proven to work, and because it allows to measure all three relevant probabilities, all in a simpler to carry-out method. As discussed above, the article by Claes et al., while interesting, does not offer enough promise. Comparing this method to the QPT approach shows a gain of almost a factor 10 in terms of the number of sampling needed.

In various embodiments, the method may present one or more of the following features:

- operation d) comprises fitting the measurements $|\langle X + i\,Y\rangle_T|$ on a curve $F_{Z,SPAM}^{T} \times (1 - 2pZ_T)^n$, where n is the number of CNOT repetitions, $F_{SPAM}^{T}$ derives from state preparation and measurement errors on the target qubit so as to derive the phase flip probability value $pZ_T$ for the target qubit,

- operation d) comprises fitting the measurements $|\langle X + i\,Y\rangle_C|$ on a curve $F_{Z,SPAM}^{C} \times (1 - 2pZ_C)^n$, where n is the number of CNOT repetitions, $F_{SPAM}^{C}$ derives from state preparation and measurement errors on the control qubit so as to derive the phase flip probability value $pZ_C$ for the control qubit,

- operation d) comprises fitting the measurements $|\langle X + i\,Y\rangle_C|$ on a curve $F_{SPAM}^{C} \times (F_{CR}^{C} \times F_{restab}^{C})^n \times (F_P^{T})^{mod(2,n)} \times (F_{CR}^{T})^{\frac{n}{2}} \times (F_{restab}^{T})^{\lfloor\frac{n}{2}\rfloor}|$, where n is the number of CNOT repetitions,

$F_{SPAM}^C$ derives from state preparation and measurement errors on the control qubit, $F_{CR}^C$ derives from errors on the control qubit happening during step S2), $F_{restab}^C$ derives from errors happening on the control qubit during step S3), and $F_P^T$ derives from state preparation errors of the target qubit, and calculating the phase flip probability value for the control qubit $pZ_C = \frac{1-F_{CR}^C \times F_{restab}^C}{2}$,

- operation d) comprises fitting the measurements $|\langle X + i\, Y \rangle_T|$ on a curve $F_{SPAM}^T \times (F_{CR}^T \times F_{restab}^T)^n$ where n is the number of CNOT repetitions, $F_{SPAM}^T$ derives from state preparation and measurement errors on the target qubit, $F_{CR}^T$ derives from errors on the target qubit happening during step S2), and $F_{restab}^T$ derives from errors happening on the target qubit during step S3), and calculating phase flip probability value for the target qubit $pZ_T = \frac{1-F_{CR}^T \times F_{restab}^T}{2}$,

- operation d) comprises simultaneously fitting the measurements of operation c5) on respective curves $|\langle X + i\, Y \rangle_T| = F_{SPAM}^T \times (F_{CR}^T \times F_{restab}^T)^n$ and $|\langle X + i\, Y \rangle_C| = F_{SPAM}^C \times (F_{CR}^C \times F_{restab}^C)^n \times (F_P^T)^{mod(2,n)} \times (F_{CR}^T)^{\frac{n}{2}} \times (F_{restab}^T)^{\left|\frac{n}{2}\right|}$, where n is the number of CNOT repetitions, $F_{SPAM}^C$ derives from state preparation and measurement errors on the control qubit, $F_{CR}^C$ derives from errors on the control qubit happening during step S2), $F_{restab}^C$ derives from errors happening on the control qubit during step S3), $F_P^T$ derives from state preparation errors of the target qubit, $F_{SPAM}^T$ derives from state preparation and measurement errors on the target qubit, $F_{CR}^T$ derives from errors on the target qubit happening during step S2), and $F_{restab}^T$ derives from errors happening on the target qubit during step S3), and calculating phase flip probability value for the target qubit $pZ_T = \frac{1-F_{CR}^T \times F_{restab}^T}{2}$ and the phase flip probability value for the control qubit $pZ_C = \frac{1-F_{CR}^C \times F_{restab}^C}{2}$,

- operation d) comprises fitting the measurements $|\langle Z_T \rangle|$ from operation c10) on the curve $F_{SPAM}^T \times (1 - 2\, pX_T)^n$ where n is the number of CNOT repetitions, $F_{SPAM}^T$ derives from state preparation and measurement errors on the target qubit to derive the bit flip probability value $pX_T$ for the target qubit,

- operation c9) further comprises measuring the Pauli operator Z of the control qubit, and in which operation d) comprises simultaneously fitting the measurements of operation c10) on respective curves $|\langle Z \rangle_T| = F_{SPAM}^T \times (F_{CR}^T \times F_{restab}^T)^n \times (F_P^C)^{mod(2,n)} \times (F_{CR}^C)^{\frac{n}{2}} \times (F_{restab}^C)^{\left|\frac{n}{2}\right|}$ and $|\langle Z \rangle_C| = F_{SPAM}^C \times (F_{CR}^C \times F_{restab}^C)^n$ where n is the number of CNOT repetitions, $F_{SPAM}^T$ derives from state preparation and measurement errors on the target qubit, $F_{CR}^T$ derives from errors on the target qubit happening during step S2), $F^T_{restab}$ derives from errors happening on the target qubit during step S3), $F^C_{SPAM}$ derives from state preparation and measurement errors on the control qubit, $F^C_{CR}$ derives from errors on the control qubit happening during step S2), $F^C_{restab}$ derives from errors happening on the control qubit during step S3), and $F^C_P$ derives from derives from state preparation errors of the control qubit, and calculating the bit flip probability value for the target qubit $pX_T = \frac{1 - F^T_{CR} \times F^T_{restab}}{2}$, and

- step S2) includes turning off said dissipative stabilization on said target qubit, or applying another stabilization conditional on the control qubit on said target qubit,

The invention also concerns a computer program comprising instructions which, when executed by processing circuitry, causes the processing circuitry to carry out the above method, a carrier containing such a computer program wherein the carrier comprises one of an electronic signals, optical signal, radio signal or computer readable storage medium, and a computer program product comprising a non-transitory computer readable medium having stored thereon such a computer program.

Other features and advantages of the invention will readily appear in the following description of the drawings, which show exemplary embodiments of the invention and on which:

- Figure 1 shows a general diagram of a computer device for carrying out a method according to an embodiment,
- Figure 2 shows a generic view of a computer program used in the embodiment of Figure 1,
- Figure 3 shows a block diagram of a method according to an embodiment,
- Figure 4 shows an exemplary fitting with a first type of method used in an operation of Figure3, and
- Figure 5 shows an exemplary fitting with a second type of method used in an operation of Figure3.

The drawings and the following description are comprised for the most part of positive and well-defined features. As a result, they are not only useful in understanding the invention, but they can also be used to contribute to its definition, should the need arise.

B. Biased-noise qubits

The invention concerns the realization of high-performance quantum gates in the context of biased-noise qubits and the determination of their fidelity.

Stabilized cat qubits are known to benefit from a noise bias. More precisely, an effective error channel (e.g., bit errors or "bit flips") is suppressed in an exponential way with the "size" - i.e., the average number of photons - of the Schrödinger cat states of the cat qubits. Other qubits are known to benefit from a noise bias, such as two-photon exchange qubits (as disclosed by Pop et al. "Coherent suppression of electromagnetic dissipation due to superconducting quasiparticles", Nature 508, 369-372, 2014, doi 10.1038/nature13017). In the following, cat qubits will be the main example discussed, but it should be kept in mind that the method applies to any biased-noise qubit having a dissipative stabilization scheme.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states. Because of this noise structure, it is considered that the use of a single repetition code is sufficient to correct the remaining error channel. Indeed, if one wishes to correct only the phase jump, it is sufficient to just use a phase jump error correction code. This can be, for example a repetition code defined in the dual base, or any other classical error correction code.

A cat qubit repetition code is made using d cat qubits (called data cat qubits), in which logical information is encoded. This is performed by repeatedly measuring quantum operators which reveal if some errors have occurred on the data cat qubits. This is done by using d-1 additional cat qubits (called ancilla cat qubits or ancillary cat qubits). The quantum circuitry of the repetition code requires preparation of the ancillary qubit in the state "+" - for a cat qubit, this is the Schrödinger cat state -, two CNOT gates between the ancillary cat qubits and the data cat qubits, and measurement of the Pauli X operator of the ancillary qubit - for a cat qubit, this is the photon number parity -.

The challenge in implementing this repetition code is to run the code on hardware which operates below a fault-tolerant error threshold. This means that the fidelity of the quantum operations in this circuit must be very high for the code to have a positive impact.

More precisely, when the repetition code is operated above the threshold, i.e., when the fidelity of the physical operations composing the repetition code is insufficient, the lifetime of the logical information decreases when the number of physical data qubits d increases: the new errors introduced by the addition of quantum systems are not compensated by the error correction strategy.

On the other hand, when the repetition code is operated under the error correction threshold, i.e., when the fidelity of the physical operations is sufficient, the lifetime of the logical information grows exponentially with the number d of data qubits (which is also called the distance d of the repetition code).

More recently, the Applicant has also proposed a classical LPDC code using quantum cat qubits to encode logical qubits. These quantum systems offer a promising platform for realizing practical fault tolerant quantum computing (FTQC). As a result, the optimization of the CNOT quantum gates used in the SER is ever more critical.

The field of quantum computing is quite young. This is even more true in the case of the cat qubit domain. In many ways, it behaves like a research domain. As a result, the preferred way of progress is to make changes which may appear very incremental at first sight, but which in fact require significant physics works to be validated and industrialized. In other words, whatever is considered to be the current state of the art is generally left unchanged until a significant roadblock is discovered. This means that known to work solutions are not easily replaced.

### C. Cat qubits

Part of the Applicant's research in the past years has concerned with the stabilization of cat qubits. In "Exponential suppression of bit-flips in a qubit encoded in an oscillator", Nature Physics, 2020, R. Lescanne *et al.* demonstrated that cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

### D. Stabilization schemes

Cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2-\alpha^2)b^\dagger$ + h.c., where b is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^{\dagger}a$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + h.c.$, where $g_2$ is the complex two-photon coupling rate, $a$ is the photon annihilation operator, $\alpha$ is a complex number defining the cat qubit, and $\sigma_{\pm}$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a^{\dagger})^2 - \alpha^2\right)$, where $\kappa_{SC}$ is the squeezed two-photon dissipation rate, $a$ is the photon annihilation operator, $\alpha$ is a complex number defining the cat qubit, $r$ and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{SC}$ $((\cosh(r)a + \sinh(r)e^{i\theta}a^{\dagger})^2 - \alpha^2)$ $b + h.c.$, where b is the photon annihilation operator of mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/\hbar = g_2(a^2 + \lambda a^{\dagger}a - \alpha^2)b^{\dagger} + h.c.$, where $g_2$ is the amplitude of a pump at frequency $|2f_a - f_b|$, $a$ is the annihilation operator of the cat qubit mode a, $\lambda$, is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$, as a function of the complex squeezing parameter $\xi = re^{i\theta}$ as follows: $\lambda = 2\tanh(r)$.

g) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coufpling a lossy buffer mode b with dissipation rate $\kappa_b$, and a three-wave mixing device to the cat qubit mode a which engineers the Hamiltonian $H/\hbar = g_2(a^2-a^2)b^{\dagger} + h.c.$, where b is the photon annihilation operator of the buffer mode b provided the mode frequencies verify substantially $2f_a = f_b$ and $g_2 < \kappa_b$ to which a drive of the buffer mode at frequency $f_b$ is added.

The present invention is directed to a stabilization scheme or a combination thereof including at least a dissipative stabilization schemes (e.g. a), e), f) and g) above) to generate the data cat qubits and the ancilla qubits used in the QECC.

E. CNOT gates implementation

In application EP23305297.6, the Applicant discussed in detail CNOT quantum gates implementations and the ingredients used to make them possible.

The theoretical realization of CNOT gates between two stabilized cat qubits in modes $a_1$ and $a_2$ relies on the use of the following three ingredients:

1) the performance of a dissipative stabilization on the control qubit $a_1$, with the jump operator $L_c =$

$$\sqrt{\kappa_2}\left(a_1^2 - \alpha^2\right)$$, where $a_1$ is the photon annihilation operator of mode $a_1$ and $\alpha$ is a complex number defining the cat qubit, or one of the stabilization schemes described above,

2) the addition in the circuit of a 'feedforward' Hamiltonian, also called the 'CNOT' Hamiltonian or 'longitudinal'

$$H_{CX}/\hbar = g_{CX}\left(a_1 + a_1^\dagger - 2\alpha\right)\left(a_2^\dagger a_2 - \alpha^2\right)$$

Hamiltonian with the formula , where $g_{cx}$ is the complex amplitude of the Hamiltonian, $a_1$ is the photon annihilation operator of mode $a_1$, $a_2$ is the photon annihilation operator of mode $a_2$, and $\alpha$ is a complex number defining the cat qubit,

3) the performance of a dissipative stabilization on the target qubit $a_2$ which depends on the state of the control qubit $a_1$,

$$L_t(t) = \sqrt{\kappa_2}\left(a_2^2 - \frac{1}{2}\alpha(a_1 + \alpha) + \frac{1}{2}\alpha e^{\frac{i2\pi}{T}t}(a_1 - \alpha)\right)$$

with the jump operator , where $\kappa_2$ is the two-photon dissipation rate, $a_1$ is the photon annihilation operator of mode $a_1$, $a_2$ is the photon annihilation operator of mode $a_2$, and $\alpha$ is a complex number defining the cat qubit, or one of the dissipative stabilization schemes (a), e), f) and g)) described above in a form adapted to be made conditional on an ancilla qubit state.

Ingredient 2 can be implemented in a variety of manners depending on the superconducting quantum circuit topology. In a context where the target qubit and the control qubit are non-linearly coupled, it can be achieved by applying a radiation having the control qubit frequency to the target qubit and/or the control qubit. By applying radiation to the target qubit and/or the control qubit, it is meant that a radiation is applied to the superconducting quantum circuit which reaches non-linear part of the superconducting quantum circuit coupling the target qubit and the control qubit, thereby inducing the feedforward Hamiltonian.

The best theoretical implementation uses the 3 above ingredients. However, the experiments of the Applicant have revealed that the two first ingredients offer a good compromise between the ease of realization and quality of the results.

Ingredient 3, when applied, replaces the conventional stabilization performed on the target qubits to stabilize the cat states. If ingredient 3 is absent, the target qubits are not subject to any stabilization of the cat states while the ingredients for performing the gate are applied. The same will apply all of the embodiments described below: during a gate operation or a measurement operation, the stationary stabilization of the target cat qubits is turned off, and it may be replaced by ingredient 3 during a gate operation.

Indeed, although in theory, one can realize a CNOT gate without the feedforward Hamiltonian and only the ingredients 1 and 3, in practice the CNOT gate fidelity is poor without this term, such that it is crucial to implement the ingredient 2).

As a result, the realization of the CNOT gate between a control qubit and a target qubit can be seen as made up of three main steps:

S1) applying a dissipative stabilization on the target qubit and the control qubit,
S2) applying a radiation having said control qubit resonance frequency such that said target qubit and said control qubit are substantially simultaneously subject to the feedforward Hamiltonian resulting from said radiation having said control resonance frequency,
S3) after a chosen gate duration, turning off said radiation having said control qubit resonance frequency, and applying said dissipative stabilization on said target qubit for a chosen restabilization duration.

In step S2), applying radiation having said control qubit resonance frequency to achieve ingredient 2 can be done in a variety of manners depending on the superconducting quantum circuit topology. It can be done by applying radiation to the superconducting quantum circuit in any manner such that this radiation reaches non-linear part of the superconducting quantum circuit coupling the target qubit and the control qubit, thereby inducing the feedforward Hamiltonian.

For example, this can be done by directly emitting the radiation on a non-linear element which couples the target qubit and the control qubit. In some embodiments, such as disclosed in EP23305298.4, this non-linear element can be part of the target qubit. In other embodiments, the radiation can be introduced otherwise. The most important fact is that the radiation reaches the part of the superconducting quantum circuit which non-linearly couples the target qubit and the control qubit to achieve the feedforward Hamiltonian of ingredient 2 as described above.

Steps S1) to S3) include the case where the ingredient 3 is included or not during step S2). When ingredient 3 is used, it replaces the target qubit dissipative stabilization during step S2). When ingredient 3 is not used, the target qubit dissipative stabilization during step S2) is still suppressed, and the chosen gate duration must be shorter than the target qubit decoherence time.

While experimenting on the CNOT quantum gates of EP23305297.6, the Applicant was extremely surprised to discover that the above step sequence has error decorrelation effects similar to the theoretical article by Claes *et al.,* but without the need to introduce random single qubit gates. As a result, not only is it possible to make the CNOT fidelity measurement more precise, but it also is a lot faster and less error prone than the method theorized in the article by Claes *et al.*.

F. Embodiments

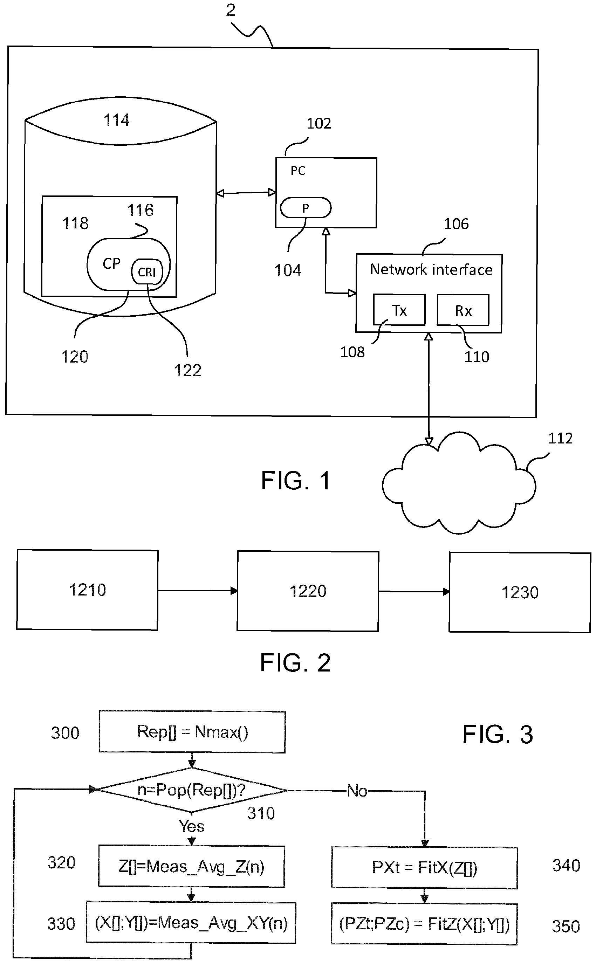

More precisely, the Applicant discovered a method shown on Figure 3 which allows to remarkably measure all three probability values for quantifying the CNOT fidelity.

The computer device shown on Figure 1 as a block diagram of an apparatus 2 (e.g., a network node, connected device, and the like), according to an embodiment. As shown in Figure 1 the apparatus may comprise: processing circuitry (PC) 102, which may include one or more processors (P) 104; a network interface 106 comprising a transmitter (Tx) 108 and a receiver (Rx) 110 for enabling the apparatus to transmit data to and receive data from other computing devices connected to a network 112 (e.g., an Internet Protocol (IP) network) to which network interface 106 is connected; and a local storage unit (a.k.a., "data storage system") 114, which may include one or more non-volatile storage devices and/or one or more volatile storage devices.

In embodiments where PC 102 includes a programmable processor, a computer program product (CPP) 116 may be provided. CPP 116 includes a computer readable medium (CRM) 118 storing a computer program (CP) 120 comprising computer readable instructions (CRI) 122. CRM 118 may be a non-transitory computer readable medium, such as, magnetic media (e.g., a hard disk), optical media, memory devices (e.g., random access memory, flash memory), and the like.

Processors 104 include any means known for performing automated calculus, such as CPUs, GPUs, CPUs and/or GPUs grids, remote calculus grids, specifically configured FPGAs, specifically configured ASICs, specialized chips such as SOCs or NOCs, AI specialized chips, etc.

In an embodiment, data storage 114 may store CNOT execution parameters (such as gate duration, restabilization time, biased-noise qubit parameters, cat size, etc.), CNOT repetitions set, ceiling values, preparation state phase values, and any other data discussed below.

In the example described herein, the data storage 114 may be realized in any way suitable, that is by means of a hard disk drive, a solid-state drive, a flash memory, a memory embedded in a processor, a distant storage accessible in the cloud, etc. Data storage 114 may also store any transitory data which may be generated in the course of executing the invention, as well as measurements, parameters or probabilities determined during execution of the method.

In the following the notions of frequency and angular frequency will be designated by the expression frequency for simplicity's sake. The man skilled in the art will readily identify by the context which is relevant.

Figure 2 shows an exemplary schematic of computer program 120.

The computer program (CP) 120 comprises three main modules which work hand-in-hand:

- A preparation module 1210,
- A measurement module 1220, and
- A fidelity calculation module 1230.

The preparation module 1210 may be used to determine the elements for performing the method, such as the ceiling N of number of gates to determine the average values needed. As will appear below, there are various manners to determine N.

The measurement module 1220 may be used to control the execution of the measurements used to determine the CNOT gate fidelity. In some embodiments, determining the ceiling N may involve using the measurement module 1220. Generally speaking, the measurement module 1220 controls the application of radiation to establish and stabilize the qubits, as well as to apply ingredient 2 to perform the CNOT gate. The measurement module 1220 may also be used to control the preparation of the logical states for applying the CNOT gate.

Finally, the fidelity calculation module 1230 may be used to calculate the CNOT gate fidelity parameters based on the measurements performed. As will appear below, this includes fitting the measurements on exponential curves which are based on an exponential function of the number of CNOT gate repetitions.

It will appear readily that the module presentation above is mainly a functional view of the actions performed by the computer program in executing the method. The modules may be combined, fused, intertwined or otherwise linked in the computer program.

Figure 3 shows a generic diagram of an embodiment of a method according to the invention.

F1. Method initialization

In a first operation 300, a function Nmax() is run in order to determine an array Rep[] of gate repetitions. This function may for instance be executed by the preparation module 1210.

As will appear below, the method relies on determining average values of Pauli operators of the control qubit after the CNOT gate has been performed n times in a row, with n varying between 0 and a ceiling value. This ceiling value can be different for determining the bit flip probability value (or bit flip fidelity parameter) $pX_T$ for the target qubit and for determining the phase flip probability values (or phase flip fidelity parameters) $pZ_C$ for the control qubit and $pZ_T$ for the target qubit.

Function Nmax() may determine a maximum number Nbf of CNOT gates repetition for determining a bit flip fidelity parameter $pX_T$ and/or a maximum number Npf of CNOT gates repetition for determining phase flip fidelity parameters $pZ_C$ for the control qubit and $pZ_T$ for the target qubit.

The choice by function Nmax() of the interval and sampling of number of repeated CNOT gates n between [0;Nbf] for measuring bit flip fidelity and [0;Npf] for measuring phase flip fidelity will now be described. The Applicant has identified 3 manners to determine these factors, depending on the a priori knowledge of the gate performance.

For the sake of simplicity, Nbf and Npf will be referred to as Nmax in the following since they play the same functional role. The goal of Nmax and the sampling is to resolve the decays of $|\langle Z_T \rangle|$ (the average value of the measurement of the Pauli operator Z of the target qubit) or $|\langle X + iY \rangle_{C\,or\,T}|$ (the average value of the measurement of the Pauli operator X added with complex number i times the value of the Pauli operator Y of the control qubit or of the target qubit) to fit the parameters accurately.

As mentioned above, because the CNOT gate is bias-preserving, Nmax and the sampling are different between the measurements of $pX_T$ on the one hand and $pZ_C$ and $pZ_T$ on the other hand. In particular, $pZ_C$ and $pZ_T$ are expected to be orders of magnitude larger than $pX_T$. Therefore, the choice of sampling and Nmax is much more important for the $pX_T$ measurement, because its decay is much slower.

A first possibility is to iterate on Nmax until convergence is reached. Starting from a first Nmax with uniform sampling, the measurement sequence of operations 320 or 330 below is done and followed by the fit of operation 340 or 350 below. Then the contrast of the measurement after Nmax gates may be analyzed. If the contrast is less than a factor 0.2 times the initial contrast, Nmax is scaled down. If it is more than a factor 0.8 times the initial contrast, Nmax is scaled up. If it is in between these two values, the fit result is used to set the following Nmax to int(4/(1-2* $pX_T$)).

For the $pX_T$ measurement, Nmax can be initialized with a value of 50, using a scaling factor of 5, and a sampling of Nmax/10. For the $pZ_C$ and $pZ_T$ measurement, Nmax can be initialized with a value of 10, using a scaling factor of 2, and a sampling of 1.

A second possibility for the $pX_T$ measurement is to resolve the exponential decay with a power sampling of n between 0 and a large value of Nmax. For instance, the following sampling may be used for $n : n = 3^p$ with p = [0,1,2, ... 9], which corresponds to Nmax = 19683 gates. It is then possible to identify the smallest power such that the contrast is below 0.3 times the initial contrast, and use it as Nmax in a subsequent measurement, with a smaller sampling.

A third possibility, valid for both the $pX_T$ measurements and the $pZ_C$ and $pZ_T$ measurements, is to use a prior knowledge of the system. From single cat measurements of phase flips and bit flips (or other biased-noise qubit used), and knowing the duration of the CNOT gate, an upper bound can be inferred for $pX_T, pZ_C$ and $pZ_T$. The upper bounds are noted

$$Nmax \approx int\left(\frac{4}{1-2\,p}\right)$$

$pX_{T\_inferred}, pZ_{T\_inferred}, pZ_{C\_inferred}.$ These upper bounds can be used to derive Nmax with

where p = $pX_{T\_inferred}$ or max($pZ_{C\_inferred}, pZ_{T\_inferred}$). The sampling is chosen to be about 10 points within the interval.

Other methods can be used to determine Nmax, such as choosing an arbitrarily high value which is known to guarantee reliable results. As it readily appears from the above, the method applies a similar philosophy to the $pX_T$ measurement on the one hand, and to the $pZ_C$ and $pZ_T$ measurements on the other hand. As a result, only $pX_T$, or only $pZ_C$ and $pZ_T$ may be measured, in which case only Nbf or only Npf need to be determined. This will also show in operations 320 to 350.

Consequently, the result of operation 300 may be stored in either two vectors Repbf[] and Reppf[], or in a single vector Rep[], with an indication of the value Npf which is expected to be lower than Nbf. As will appear below, depending on the order in which the measurements are carried out, Rep[] may be defined implicitly by Nbf and Npf alone.

F2. Average Pauli operators measurements

After operation 300 has been made, the measurement module 1220 may be used to perform the measurements required by the method. In the example shown below, a loop is executed in which the vector Rep[] is popped in an operation 310, and measurement operations 320 and 330 are thereafter performed for the corresponding value of n.

More precisely, in operation 320, a function Meas_Avg_Z(n) is executed to determine the value of the Pauli Z operator after n repetitions of the CNOT gate. More precisely, this entails determining a measurement control qubit logical state $|\alpha\rangle_C$, and a measurement target qubit logical state $|\alpha\rangle_T$. These logical states will be used to initialize the control qubit and the target qubit before applying n times the CNOT gate. After determining these logical states, the control qubit is prepared in a state $|+\alpha\rangle_C$ or $|-\alpha\rangle_C$, and the target qubit is prepared in a state $|+\alpha\rangle_T$ or $|-\alpha\rangle_T$. Thereafter, the CNOT gate is repeated n times, that is steps S1) to S3) are performed sequentially, and this sequence is repeated n times. As explained in section E., the CNOT gate may include ingredient 3 or not. Finally, once the CNOT gate has been repeated, at least the Pauli operator Z of the target qubit is measured. In another embodiment, the Pauli operator Z of the control qubit is also measured for reasons that will appear below. As is classic for quantum measurements, this operation is repeated several tens or several hundreds of times in order to obtain an average measurement value $|\langle Z_{T,n}\rangle|$ of the target qubit for repetition number n, and optionally $|\langle Z_{C,n}\rangle$ of the control qubit for repetition number n. It is important that the preparation of the control qubit and the target qubit be the same for each of the repetitions for determining the average value(s).

Similarly, in operation 330, a function Meas_Avg_XY(n) is executed to determine the value of the Pauli X and Y operators after n repetitions of the CNOT gate. There are a few differences between function Meas_Avg_XY(n) and function Meas_Avg_Z(n):

- function Meas_Avg_XY(n) always measures the Pauli X and Y operators for both the control qubit and the target qubit,
- function Meas_Avg_XY(n) prepares the control qubit and the target in different states than those of function Meas_Avg_Z(n). Indeed, in function Meas_Avg_XY(n), a measurement control qubit logical state $|\alpha\rangle_C$, a phase $\phi_C$ comprised in the range $[0;2\pi]$, a measurement target qubit logical state $|\alpha\rangle_T$, and a phase $\phi_T$ comprised in the set of values $\{0;\pi\}$ are first determined and fixed, and thereafter the control qubit is prepared in a state $|+\alpha\rangle_C + e^{i\phi_C}|-\alpha\rangle_C$, and the target qubit is prepared in a state $|+\alpha\rangle_T + e^{i\phi_T}|-\alpha\rangle_T$. As with function Meas_Avg_Z(n), the measurements are repeated so as to determine $|\langle X + i\,Y\rangle_T|$ for the target qubit and $|\langle X + i\,Y\rangle_C|$ for the control qubit, with the same preparation of states.

Because of the nature of the operations, $|\langle X+i\,Y\rangle_T|$ and $|\langle X+i\,Y\rangle_C|$ can be determined by averaging the measures of $\langle X_{T,n}\rangle + i\langle Y_{T,n}\rangle$ and $\langle X_{C,n}\rangle + i\langle Y_{C,n}\rangle$, or the average measures $\langle X_{T,n}\rangle$ and $\langle Y_{T,n}\rangle$ of the target qubit for repetition number n, and $\langle X_{C,n}\rangle$ and $\langle Y_{C,n}\rangle$ can be first calculated and added to obtain $|\langle X + i\,Y\rangle_T|$ and $|\langle X + i\,Y\rangle_C|$.

Obviously, if only $pX_T$ is measured (respectively if only $pZ_C$ and $pZ_T$ are measured), then operation 330 (respectively operation 320) can be bypassed. Similarly, if n > Npf, then operation 330 can be bypassed.

While this embodiment shows one efficient way of popping Rep[] to perform the measurements, there are many other ways which can be contemplated, as long as all of the measurements are properly performed to determine the average values. This also means that, while operations 320 and 330 above include the repetition of the measurements to directly determine the average values for a given n, these measurements may be performed in a completely different order, as long as the average values are only determined after enough measurements have been obtained for each value of n with the same preparation states. Also, while the above is described as a loop, it can be described as any other type of measurement sequence which allows to obtain the average values. Finally, as described above, not all integers need to be tried and some sampling can be done.

## F3. Fidelity values determination

Finally, once the measurement loop is finished, the fidelity calculation module 1230 may be used to determine the fidelity values.

As with the measurements, this is done via two operations 340 and 350, respectively for the $pX_T$ measurement of operation 320 on the one hand, and the $pZ_C$ and $pZ_T$ measurement of operation 330 on the other hand. Obviously, if only $pX_T$ is measured (respectively if only $pZ_C$ and $pZ_T$ are measured), then operation 350 (respectively operation 340) can be bypassed.

Operation 340 is performed by executing a function FitX(Z[]) which will determine an exponential of n-based curve(s) to calculate $pX_T$. Indeed, the Applicant has discovered two manners in which $pX_T$ can be calculated: a simpler, less precise one, and a more complex, fully accurate one.

According to the simpler method, only $|\langle Z_{T,n}\rangle|$ needs to be measured. More precisely, the measurements $|\langle Z_{T,n}\rangle|$ are fitted on a curve $F_{SPAM}^T \times (1 - 2\,pX_T)^n$ to derive the bit flip probability value $pX_T$ for the target qubit, where $F_{SPAM}^T$ derives from state preparation and measurement errors on the target qubit. This fitting can be done in any known way of fitting an exponential curve, and allows to determine directly both $F_{SPAM}^T$ and $pX_T$. Incidentally, $F_{SPAM}^T$ corresponds to the value of the fitted curve for n equal to 0.

According to the more complex method, both $|\langle Z_{T,n}\rangle|$ and $|\langle Z_{C,n}\rangle|$ need to be measured. More precisely, these measurements are simultaneously fitted on two respective curves:

$$|\langle Z\rangle_T| = F_{SPAM}^T \times (F_{CR}^T \times F_{restab}^T)^n \times (F_P^C)^{\mathrm{mod}(2,n)} \times (F_{CR}^C)^{\frac{n}{2}} \times (F_{restab}^C)^{\left\lfloor\frac{n}{2}\right\rfloor},$$

and

$$|\langle Z\rangle_C| = F_{SPAM}^C \times (F_{CR}^C \times F_{restab}^C)^n$$

where $F_{SPAM}^T$ derives from state preparation and measurement errors on the target qubit, $F_{CR}^T$ derives from errors on the target qubit happening during step S2), $F_{restab}^T$ derives from errors happening on the target qubit during step S3), $F_{SPAM}^C$ derives from state preparation and measurement errors on the control qubit, $F_{CR}^C$ derives from errors on the control qubit happening during step S2), $F_{restab}^C$ derives from errors happening on the control qubit during step S3), and $F_P^C$ derives from derives from state preparation errors of the control qubit.

Again, this fitting can be made in any conventional manner and it will allow to derive the values $F_{CR}^T$ and $F_{restab}^T$ which allow to calculate and return $pZ_T = \frac{1 - F_{CR}^T \times F_{restab}^T}{2}$.

In an alternative embodiment, the two respective curves can be fitted independently of one another. The fitting is a little faster as the fitting is one-dimensional and can be done in parallel, at the cost of preciseness in the results.

Operation 350 is performed by executing a function FitZ(X[];Y[]) which will determine exponential of n-based curves to calculate $pZ_C$ and $pZ_T$. Here too, the Applicant has discovered two manners in which $pZ_C$ and $pZ_T$ can be calculated: a simpler, less precise one, and a more complex, fully accurate one.

According to the simpler method, $|\langle X + i\,Y\rangle_T|$ and $|\langle X + i\,Y\rangle_C|$ are simultaneously fitted on two respective curves:

-

$$|\langle X + i\,Y\rangle_T| = F_{Z,SPAM}^T \times (1 - 2pZ_T)^n,$$

and

-

$$|\langle X + i\,Y\rangle_C| = F_{Z,SPAM}^C \times (1 - 2pZ_C)^n,$$

where $F_{Z,SPAM}^T$ and $F_{Z,SPAM}^C$ respectively derive from state preparation and measurement errors on the target qubit and the control qubit. Here too, this fitting can be done in any known way of fitting an exponential curve, and allows to determine directly both $F_{Z,SPAM}^T$ and $F_{Z,SPAM}^C$ and $pZ_C$ and $pZ_T$. Incidentally, $F_{Z,SPAM}^T$ and $F_{Z,SPAM}^C$ correspond to the value of the fitted curve for n equal to 0.

According to the more complex method, $|\langle X + i\,Y\rangle_T|$ and $|\langle X + i\,Y\rangle_C|$ are simultaneously fitted on two respective curves:

-

$$\left|\langle X + i\,Y\rangle_C\right| = F_{SPAM}^C \times (F_{CR}^C \times F_{restab}^C)^n \times (F_P^T)^{mod(2,n)} \times (F_{CR}^T)^{\frac{n}{2}} \times (F_{restab}^T)^{\left|\frac{n}{2}\right|},$$

and

-

$$\left|\langle X + i\,Y\rangle_T\right| = F_{SPAM}^T \times (F_{CR}^T \times F_{restab}^T)^n$$

where $F_{SPAM}^C$ derives from state preparation and measurement errors on the control qubit, $F_{CR}^C$ derives from errors on the control qubit happening during step S2), $F_{restab}^C$ derives from errors happening on the control qubit during step S3), $F_P^T$ derives from state preparation errors of the target qubit, $F_{SPAM}^T$ derives from state preparation and measurement errors on the target qubit, $F_{CR}^T$ derives from errors on the target qubit happening during step S2), and $F_{restab}^T$ derives from errors happening on the target qubit during step S3).

In an alternative embodiment, the two respective curves can be fitted independently of one another. The fitting is a little faster as the fitting is one-dimensional and can be done in parallel, at the cost of preciseness in the results.

Here too, this fitting can be done in any known way of fitting a polynomial curve, and allows to determine parameters $F_{CR}^T, F_{restab}^T, F_{CR}^T$, and $F_{restab}^C$. Thereafter, the fidelity values can be calculated as

$$pZ_C = \frac{1 - F_{CR}^C \times F_{restab}^C}{2} \qquad pZ_T = \frac{1 - F_{CR}^T \times F_{restab}^T}{2}.$$

and

As appears from the above, the simpler or the more complex method can be used for any and each of $pX_T$, $pZ_C$ and $pZ_T$. Hence the functions FitX() and FitZ() can be modified to accommodate any of these combinations.

Thereafter, the method ends and the CNOT gate has been characterized.

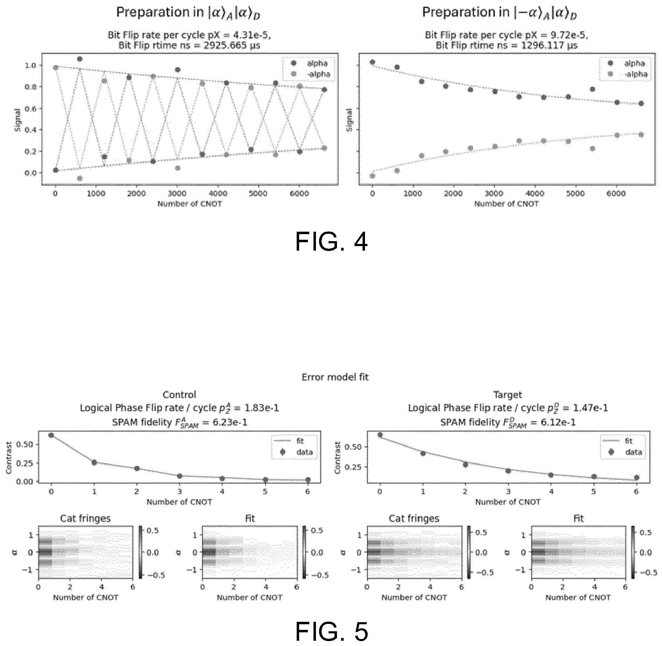

Figure 4 shows an exemplary fitting for obtaining $pX_T$ with the simpler method, and Figure 5 shows an exemplary fitting for obtaining $pZ_C$ and $pZ_T$ with the more complex method.

These measurements can be used in a variety of ways to optimize the parameters of a CNOT gate. The working principle is to vary some key parameters of the CNOT gate and to identify how the set of errors evolve with them. The optimization routine may be done as follows:

    1. For a parameter $k$ of the CNOT gate between $k_{min}$ and $k_{max}$:

        a. Set value $k$
        b. Calibrate the CNOT gate (if needed)
        c. Run $pX_T$ measurement sequence
        d. Run $pZ_T$ and $pZ_C$ measurement sequence

    2. Report $\{pX_T, pZ_T, pZ_C\}$ as a function of $k$
    3. Select the best working points as defined by the repetition code or LDPC code metrics.
    For example, phase flips can be prioritized, by optimizing gate duration reduction due to their direct proportionality, or bit flip measurement can be prioritized to optimize the restabilization duration, which is determined by the shortest time minimizing the error, etc.

The parameters can be swept independently or together. The parameters swept are for instance, but not limited to: the control cat qubit size $\alpha_C$, the target cat qubit size $\alpha_T$, the CNOT gate duration $T_{CNOT}$, the CNOT pump amplitude $g_{CNOT}$, the target qubit restabilization duration $T_{restab}$, the CNOT pump pulse shape, the delays between the stabilization pulses and the CNOT pump pulse.

It appears that the above method thus mixes physical measurements and calculations to measure CNOT gate fidelity values and to allow optimization of the gate parameters.

**Claims**

1. Method for measuring the probability of a bit flip and/or of a phase flip while performing a CNOT gate between a control qubit having a control qubit resonance frequency and a target qubit having a target qubit resonance frequency, in which said CNOT gate is performed by the following sequence of operations:

S1) applying a dissipative stabilization on said target qubit and said control qubit,
S2) applying a radiation having said control qubit resonance frequency such that said target qubit and said control qubit are substantially simultaneously subject to a Hamiltonian resulting from said radiation having said control resonance frequency,
S3) after a chosen gate duration, turning off said radiation having said control qubit resonance frequency, and applying said dissipative stabilization on said target qubit for a chosen restabilization duration,
wherein said method comprises the following operations:

a) providing a superconducting quantum circuit comprising a control qubit and a target qubit which are both biased-noise qubits stabilized in a dissipative manner, and which are non-linearly coupled,
b) determining a set of phase flip CNOT repetitions comprising a plurality of distinct integers comprised between 0 and a phase flip ceiling value and/or a set of bit flip CNOT repetitions comprising a plurality of distinct integers comprised between 0 and a bit flip ceiling value,
c) for each integer npf in said phase flip CNOT repetitions set perform steps c1) to c5) and/or for each integer nbf in said bit flip CNOT repetitions set perform steps c6) to c10):

c1) set a measurement control qubit logical state $|\alpha\rangle_C$, a phase $\phi_C$ comprised in the range $[0;2\pi]$, a measurement target qubit logical state $|\alpha\rangle_T$, a phase $\phi_T$ comprised in the set of values $\{0;\pi\}$,
c2) prepare the control qubit in a state $|+\alpha\rangle_C + e^{i\phi_C}|-\alpha\rangle_C$, and the target qubit in a state $|+\alpha\rangle_T + e^{i\phi_T}|-\alpha\rangle_T$,
c3) perform npf times said CNOT gate between the control qubit and the target qubit of operation c2),
c4) measure the Pauli operator X of the target qubit, the Pauli operator Y of the target qubit, the Pauli operator X of the control qubit, and the Pauli operator Y of the control qubit,
c5) repeat operations c2) to c4) in order to obtain an average value for each measurement of operation c4),
c6) set a measurement control qubit logical state $|\alpha\rangle_C$, and a measurement target qubit logical state $|\alpha\rangle_T$,
c7) prepare the control qubit in a state $|+\alpha\rangle_C$ or $|-\alpha\rangle_C$, and the target qubit in a state $|+\alpha\rangle_T$ or $|-\alpha\rangle_T$,
c8) perform nbf times said CNOT gate between the control qubit and the target qubit of operation c7),
c9) measure the Pauli operator Z of the target qubit,
c10) repeat operations c7) to c9) in order to obtain an average value for the measurement of operation c9),

d) if available fit the measurements $|\langle X + i\ Y \rangle_T|$ and $|\langle X + i\ Y \rangle_C|$ of operation c5) on respective curves based on an exponential function of the number of CNOT repetitions to derive phase flip probability values $pZ_C$ for the control qubit and $pZ_T$ for the target qubit, and the measurements $|\langle Z_T \rangle|$ of operation c10) on a curve based on an exponential function of CNOT repetitions to derive the bit flip probability value $pX_T$ for the target qubit.

2. Method according to claim 1, in which operation d) comprises fitting the measurements $|\langle X + i\ Y \rangle_T|$ on a curve $F_{Z,SPAM}^T \times (1 - 2pZ_T)^n$, where n is the number of CNOT repetitions, $F_{SPAM}^T$ derives from state preparation and measurement errors on the target qubit so as to derive the phase flip probability value $pZ_T$ for the target qubit.

3. Method according to claim 1 or 2, in which operation d) comprises fitting the measurements $|\langle X + i\ Y \rangle_C|$ on a curve $F_{Z,SPAM}^C \times (1 - 2pZ_C)^n$, where n is the number of CNOT repetitions, $F_{SPAM}^C$ derives from state preparation and measurement errors on the control qubit so as to derive the phase flip probability value $pZ_C$ for the control qubit.

4. Method according to claim 1 or 2, in which operation d) comprises fitting the measurements $|\langle X + i\ Y \rangle_C|$ on a curve $F_{SPAM}^C \times (F_{CR}^C \times F_{restab}^C)^n \times (F_P^T)^{mod(2,n)} \times (F_{CR}^T)^{\frac{n}{2}} \times (F_{restab}^T)^{\left|\frac{n}{2}\right|}$, where n is the number of CNOT repetitions, $F_{SPAM}^C$ derives from state preparation and measurement errors on the control qubit, $F_{CR}^C$ derives from errors on the control qubit happening during step S2), $F_{restab}^C$ derives from errors happening on the control qubit during step S3), and $F_P^T$ derives from state preparation errors of the target qubit, and calculating the phase flip probability value for the control qubit $pZ_C = \frac{1 - F_{CR}^C \times F_{restab}^C}{2}$ .

5. Method according to one of claims 1, 3 and 4, in which operation d) comprises fitting the measurements $|\langle X + i\,Y\rangle_T|$ on a curve $F_{SPAM}^T \times (F_{CR}^T \times F_{restab}^T)^n$ where n is the number of CNOT repetitions, $F_{SPAM}^T$ derives from state preparation and measurement errors on the target qubit, $F_{CR}^T$ derives from errors on the target qubit happening during step S2), and $F_{restab}^T$ derives from errors happening on the target qubit during step S3), and calculating phase flip probability value for the target qubit $pZ_T = \frac{1 - F_{CR}^T \times F_{restab}^T}{2}$ .

6. Method according to claim 1, in which operation d) comprises simultaneously fitting the measurements of operation c5) on respective curves $|\langle X + i\,Y\rangle_T| = F_{SPAM}^T \times (F_{CR}^T \times F_{restab}^T)^n$ and $|\langle X + i\,Y\rangle_C| = F_{SPAM}^C \times (F_{CR}^C \times F_{restab}^C)^n \times (F_P^T)^{mod(2,n)} \times (F_{CR}^T)^{\frac{n}{2}} \times (F_{restab}^T)^{\left|\frac{n}{2}\right|}$ , where n is the number of CNOT repetitions, $F_{SPAM}^C$ derives from state preparation and measurement errors on the control qubit, $F_{CR}^C$ derives from errors on the control qubit happening during step S2), $F_{restab}^C$ derives from errors happening on the control qubit during step S3), $F_P^T$ derives from state preparation errors of the target qubit, $F_{SPAM}^T$ derives from state preparation and measurement errors on the target qubit, $F_{CR}^T$ derives from errors on the target qubit happening during step S2), and $F_{restab}^T$ derives from errors happening on the target qubit during step S3), and calculating phase flip probability value for the target qubit $pZ_T = \frac{1 - F_{CR}^T \times F_{restab}^T}{2}$ and the phase flip probability value for the control qubit $pZ_C = \frac{1 - F_{CR}^C \times F_{restab}^C}{2}$ .

7. Method according to one of the preceding claims, in which operation d) comprises fitting the measurements $|\langle Z_T\rangle|$ from operation c10) on the curve $F_{SPAM}^T \times (1 - 2\,pX_T)^n$ where n is the number of CNOT repetitions, $F_{SPAM}^T$ derives from state preparation and measurement errors on the target qubit to derive the bit flip probability value $pX_T$ for the target qubit.

8. Method according to one of claim 1 to 6, in which operation c9) further comprises measuring the Pauli operator Z of the control qubit, and in which operation d) comprises simultaneously fitting the measurements of operation c10) on respective curves $|\langle Z_T\rangle| = F_{SPAM}^T \times (F_{CR}^T \times F_{restab}^T)^n \times (F_P^C)^{mod(2,n)} \times (F_{CR}^C)^{\frac{n}{2}} \times (F_{restab}^C)^{\left|\frac{n}{2}\right|}$ and $|\langle Z\rangle_C| = F_{SPAM}^C \times (F_{CR}^C \times F_{restab}^C)^n$ where n is the number of CNOT repetitions, $F_{SPAM}^T$ derives from state preparation and measurement errors on the target qubit, $F_{CR}^{T}$ derives from errors on the target qubit happening during step S2), $F_{restab}^{T}$ derives from errors happening on the target qubit during step S3), $F_{SPAM}^{C}$ derives from state preparation and measurement errors on the control qubit, $F_{CR}^{C}$ derives from errors on the control qubit happening during step S2), $F_{restab}^{C}$ derives from errors happening on the control qubit during step S3), and $F_{P}^{C}$ derives from derives from state preparation errors of the control qubit, and calculating the bit flip probability value for the target qubit $pX_{T} = \frac{1 - F_{CR}^{T} \times F_{restab}^{T}}{2}$ .

9. Method according to one of the preceding claims, in which step S2) includes turning off said dissipative stabilization on said target qubit, or applying another stabilization conditional on the control qubit on said target qubit.

10. A computer program (120) comprising instructions (122) which, when executed by processing circuitry (102), causes the processing circuitry to carry out the methods of any one of claims 1 to 9.

11. A carrier containing a computer program (120) according to claim 10 wherein the carrier comprises one of an electronic signals, optical signal, radio signal or computer readable storage medium.

12. A computer program product (116) comprising a non-transitory computer readable medium (118) having stored thereon a computer program (120) according to claim 10.

2

FIG. 1

112

| 1210 | 1220 | 1230 |

FIG. 2

FIG. 3

300    Rep[] = Nmax()

310    n=Pop(Rep[])? — No

Yes

320    Z[]=Meas_Avg_Z(n)

330    (X[];Y[])=Meas_Avg_XY(n)

340    PXt = FitX(Z[])

350    (PZt;PZc) = FitZ(X[];Y[])

FIG. 4

FIG. 5

Europäisches
Patentamt

European
Patent Office

Office européen
des brevets

# EUROPEAN SEARCH REPORT

**Application Number**

EP 24 30 5337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/390444 A9 (UNIV YALE [US]) 16 December 2021 (2021-12-16) * paragraph [0034] - paragraph [0084] * * figures 1, 2 * ----- | 1-12 | INV. G06N10/20 G06N10/40 G06N10/70 |

TECHNICAL FIELDS
SEARCHED (IPC)

G06N

The present search report has been drawn up for all claims

| Place of search | Date of completion of the search | Examiner |
|---|---|---|
| The Hague | 28 August 2024 | Baldan, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 5337

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | Publication date |
|---|---|---|---|
| US 2021390444 A9 | 16-12-2021 | CA 3104518 A1 | 02-04-2020 |
| | | CN 112654970 A | 13-04-2021 |
| | | EP 3814905 A1 | 05-05-2021 |
| | | JP 7446622 B2 | 11-03-2024 |
| | | JP 2021530042 A | 04-11-2021 |
| | | KR 20210024638 A | 05-03-2021 |
| | | SG 11202012790Y A | 28-01-2021 |
| | | US 2021125096 A1 | 29-04-2021 |
| | | WO 2020068237 A1 | 02-04-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147
- EP 23305297

- EP 23305298

**Non-patent literature cited in the description**

- **CLAES et al.** Estimating the Bias of CX Gates via Character Randomized Benchmarking. *PRX Quantum*, vol. 4, 010307
- **POP et al.** Coherent suppression of electromagnetic dissipation due to superconducting quasiparticles. *Nature*, 2014, vol. 508, 369-372

- **R. LESCANNE**. Exponential suppression of bit-flips in a qubit encoded in an oscillator. *Nature Physics*, 2020